(19) **Europäisches Patentamt / European Patent Office / Office européen des brevets**

(11) **EP 2 346 137 B1**

(12) **EUROPEAN PATENT SPECIFICATION**

(45) Date of publication and mention of the grant of the patent:
**18.03.2020 Bulletin 2020/12**

(51) Int Cl.:
*H02J 7/00* *(2006.01)*  *H01M 10/44* *(2006.01)*

(21) Application number: **11150716.6**

(22) Date of filing: **12.01.2011**

(54) **Arrangement for charging batteries**

Anordnung zum Laden von Batterien

Agencement pour charge de batteries

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2010 FI 20105041**

(43) Date of publication of application:
**20.07.2011 Bulletin 2011/29**

(73) Proprietor: **Teknoware Oy**
**15200 Lahti (FI)**

(72) Inventor: **Kuisma, Jouko**
**15200, Lahti (FI)**

(74) Representative: **Papula Oy**
**P.O. Box 981**
**00101 Helsinki (FI)**

(56) References cited:
**EP-A1- 1 684 398      JP-A- 9 308 126**
**US-A- 4 238 721      US-A1- 2007 069 690**
**US-B1- 6 271 646**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The invention relates to charging of batteries, and in particular, to charging of battery packs consisting of individual cells connected in series/parallel. A cell consists of an electrochemical pair whose electromotive force is determined according to the material of electrodes and the electrochemical series of the electrolyte. Typical battery cells include lead and alkaline batteries (Pb and NiCd batteries). The latest batteries are lithium-based.

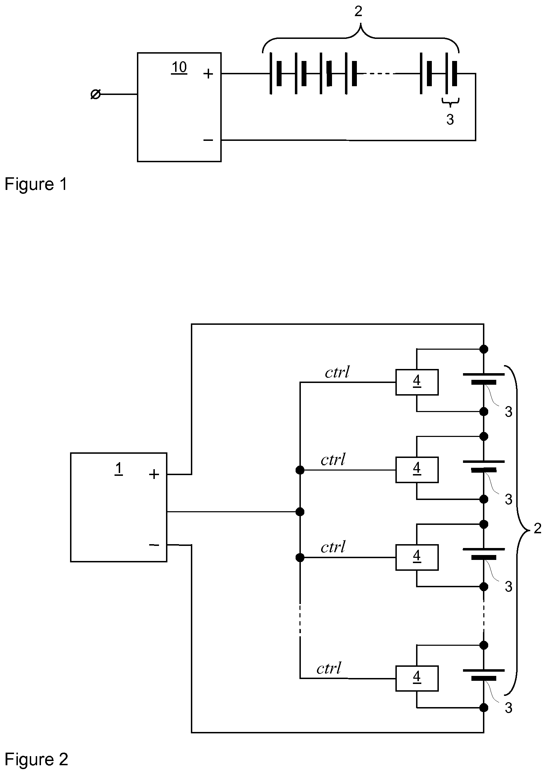

Stationary battery packs are used in various applications requiring continuous power supply as emergency power sources during outages. Typical objects needing back-up include electric plants, telephone devices and fire alarm and security light installations in buildings. In these cases the battery packs are normally connected to a charger that maintains them permanently charged in a so-called float charging state (charger IU-operated /DIN 41773). Figure 1 shows charging arrangement of this kind. In float charging all cells 3 in the battery pack 2 are connected in series and the same charging current supplied by the charger 10 passes through them. This requires that the cells 3 in the battery pack 2 be of uniform quality, i.e. their capacity and self-discharging current are equal.

For reasons of manufacturing technology the cells in the battery packs are never completely identical, however, but they always differ slightly from one another. This causes small variations in the cells, as regards the capacity and self-discharge, inter alia. In recharging this appears as differences in charging voltages of the cells, which differences make the cells have incomplete states of charge. In addition, ageing of the cells increases differences between the cells. For this purpose, different companies have developed various cell-specific monitoring and control devices. Usually, they are based on constant voltage, i.e. as the cell voltage exceeds an allowable limit, the cell-specific monitoring concerned restricts the voltage by controlling the charge current to pass through a bypass circuit and to bypass the cell. In that case charging current is still supplied to other cells, but the fully charged cell is not overcharged. These applications are common, in particular, in low-antimony and calcium alloy lead batteries, the self-discharging current of which is very low. Consequently, in these batteries the cell differences are emphasized in float charging.

The circuitry disclosed in publication CHI 1 855-6 / 1983 IEEE (page 60) are based specifically on equalizing the charge of lead battery cells, i.e. their charging current is very low. In lead batteries the overcharge does not pose a high risk, it only shortens the life span of the battery. Therefore, the battery monitors employed are based on processing a low charging current. In addition, they operate independently and are not connected to control the charger.

The latest batteries, the lithium batteries, are more critical of overcharge than the conventional Pb and NiCd batteries. If lithium batteries are overcharged, there is also a high risk of explosion, apart from damage caused by heating up of the batteries. Therefore, for lithium batteries cell-specific battery monitoring is obligatory. In general, the monitoring is implemented with a separate monitoring/control device of each cell in the battery pack, which device measures cell-specific charging voltages and controls the charger of the battery pack accordingly off from operation. Another alternative is the above-mentioned cell-specific voltage compensation unit provided with a bypass circuit.

Patent publication US 6,211,650 discloses an example of a charging arrangement in which a charging current is controlled to pass through a bypass circuit. In that solution, a bypass current is applied cell-specifically via a monitoring unit to MOS FET, in which the power of the bypass current produces thermal losses. The rest of the battery pack is further charged, but the fully charged or defective cells will not be overcharged. As the passage of charging current through the bypass circuit causes power losses, the bypass current unit will heat. Lithium-ion batteries have a high charging current and therefore their monitoring unit provided with a bypass current circuit must be constructed to tolerate high dissipation power. This requires that power cooling elements be integrated with the bypass circuit unit, and consequently the arrangement becomes large and expensive.

Patent publication US 6,271,646 discloses a similar arrangement, but to avoid power losses, in that solution, a bypass current is applied via various, complicated circuitry arrangements to other cells in the battery pack.

In patent publication US 6,121,752 the charging voltage of the cell is managed by a bypass current unit. In the publication the charging current of the charger is not controlled, however, but the charger is a device not included in the invention. In some embodiments, values have been predetermined for the voltage of the charger, of which values a controller set forth in the publication selects a suitable one. The voltage is not actually controlled, however. Most of the embodiments set forth in the publication cannot be implemented such that the number of cells connected in series could be readily changed, because cell-specific monitoring operations of the charging voltage are not mutually identical. At least in some of the embodiments the bypass circuits have to be rated to stand the entire charging current.

Patent publication US 6,025,696 employs a bypass circuit without a resistor. In addition, the connection includes a switch by which the poles of a faulted cell may be short-circuited. The current or voltage of a charger is not controlled, however.

Patent publication US 5,850,136 also employs a bypass circuit, but the bypass circuit is controlled on and off such that, while being conductive, a constant current passes therethrough. The voltage over the cell is not kept constant. The charger is a constant current/voltage source and it is not controlled in any way.

Patent publication US 5,850,351 employs a bypass circuit consisting of a route passing via a microcontroller and LEDs. From the voltage across the cell is produced an operating voltage for the microcontroller and loading thereof makes part of the charging current bypass the cell. The microcontroller measures the voltage over the cell and controls the loading on the basis of the measurement. The operation of a charger is not controlled.

In patent publication US 5,578,914 charging voltage is controlled by a bypass circuit. The charging voltage over the cell is to be kept constant by controlling the charging current via the bypass circuit. When the upper limit (saturation value) set for the bypass current is reached, the charging voltage will rise again. As the charging voltage exceeds the set limit, a digital (on/off) indication is transmitted from the bypass circuit unit to the charger. This control data controls the charger to reduce the charging current stepwise. In the publication and in the disclosed new invention, the control data is based on the voltage across the cell.

BRIEF DESCRIPTION OF THE INVENTION

The object of the invention is to provide an arrangement such that the above problems may be solved. This is achieved by an arrangement which is characterized by what is stated in the independent claim. The preferred embodiments of the invention are disclosed in the dependent claims.

The invention is based on the idea that each cell in the battery pack is accompanied with a monitoring unit that manages the cell voltage by controlling, when necessary, part of the charging current to pass through a bypass circuit of the monitoring unit. Voltage over the cell is measured and if the measured value exceeds a set limit value, the monitoring unit conveys control information to a charger that reduces the charging voltage in the battery pack. As the charger reduces the charging voltage, the charging current is also reduced, indirectly. Adjustment is continued until the voltage value of the measured cell is lower than the set limit value of the cell-specific monitoring unit. Unlike in the prior art, the invention is based on controlling the cell voltage in response to a bypass current.

The arrangement of the invention has an advantage that the implementation is simpler than before. The arrangement of the invention allows a possibility of providing a control loop, in which the charging voltage of the charger is actively controlled. By means of the invention the bypass current may be rated such that it needs to stand only part of the charging current.

BRIEF DESCRIPTION OF THE DRAWINGS

In the following, the invention will be described in greater detail in connection with preferred embodiments, with reference to the attached drawings, in which

Figure 1 shows a battery pack and a charging device,
Figure 2 shows an arrangement of the invention,
Figure 3 shows a monitoring and bypass current unit with voltage measurement and linear charger control, and
Figure 4 shows operating characteristics of current measurement of the monitoring and bypass current unit and various operating forms thereof.

DETAILED DESCRIPTION OF THE INVENTION

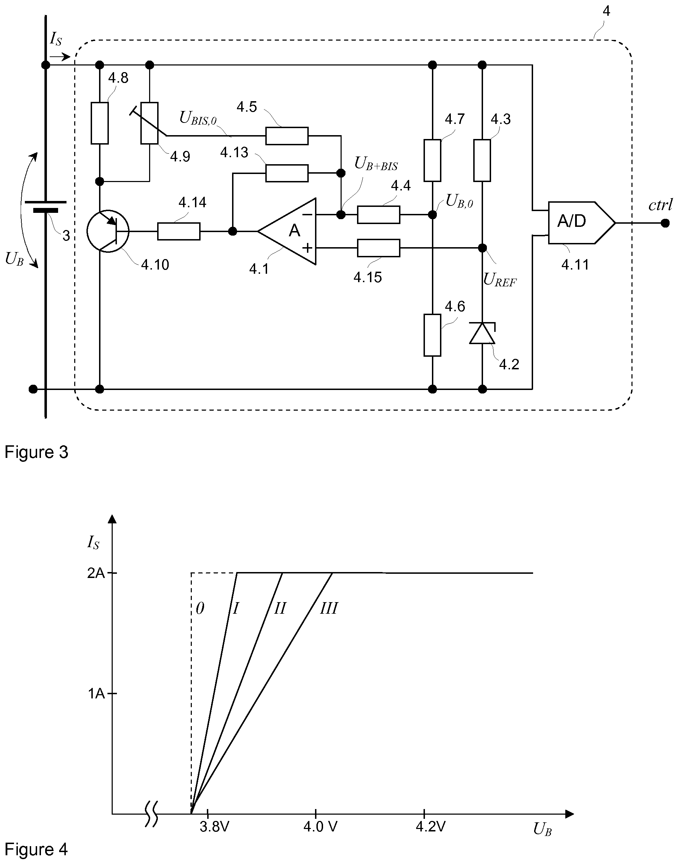

The arrangement of the invention employs the same basic principle as that employed in the constant voltage monitor provided with a bypass circuit presented in publication CHI 1 855-6 / 1983 IEEE. Figure 2 shows the arrangement of the invention, in which each cell 3 in the battery pack 2 is connected with a monitoring unit 4, whereby the cell voltage is managed by controlling, when necessary, part of the charging current to pass through a bypass circuit of the monitoring unit 4. In the monitoring unit 4 the voltage across the cell 3 is measured and if the voltage exceeds a set limit value the monitoring unit 4 conveys control data *ctrl* to a charger 1 that reduces the charging voltage in the battery pack 2. As the output voltage of the charger 1 is reduced, the charging current is also reduced, indirectly, whereby the voltage of the cells in the battery pack 2 reduces. Adjustment is continued until the voltage of overcharged cells 3 is lower than the set limit value of the cell-specific monitoring unit 4. Cell voltage changes in response to the bypass current of the monitoring unit 4, for instance as in Figure 4, and the monitoring unit 4 transmits the control data based on the cell voltage to the charger thus enabling stepless adjustment of the charging voltage of the charger.

In an alternative the charger 1 may be switched off the operation on the basis of the information provided by the monitoring unit 4 and at the same time an alarm indication may be conveyed to the service personnel. The alarm function may also be included in other embodiments of the invention.

The bypass circuit may be constructed to process (withstand thermally) part of the maximum current of the charger 1 (e.g. 20% to 50%). The use of the bypass circuit provides an advantage that the charger 1, together with the bypass circuit, equalizes the differences in the cells 3 of a lithium battery pack 2 by charging cells 3 that are in incomplete state of charge and by controlling the charging current of fully charged or defective cells 3 to pass through the bypass circuit. On the other hand, if the differences in capacities of cells 3 are considerable (e.g. 20% to 50%), the bypass circuit need not be rated thermally excessive in accordance with the case of a defective cell. Control information for the charger 1 issued by the monitoring unit 4 furnished with the bypass circuit may also be arranged to be linear, non-linear or even such that it directly gives an on/off command to the charger.

The latest lithium iron phosphate batteries are no longer so critical with regard to charging voltages as the previous applications. So, currently lithium iron phosphate batteries may be manufactured in cell groups of 6 V and up to 12 V. They do not require any longer cell-specific monitoring and the poles of individual cells are no longer visible outside the case. The connection arrangement presented herein may also be used for equalizing the voltages of battery blocks, instead of individual cell voltages. In the above cases the voltage settings must then be arranged for twice or four times higher values, respectively. The cells may also be connected to form cell groups such that a group comprises a plurality of cells connected in parallel. The cells set forth in this document may be replaced by the above-mentioned cell groups.

Figure 3 shows a preferred embodiment of the invention, in which the monitoring unit 4 controls the charging current of the cell 3 to pass, when necessary, via a bypass circuit. As the cell 3 is charged, the voltage $U_B$ of the cell 3 rises in relation to the state of charge. In other words, as the cell 3 becomes more charged, the voltage $U_B$ of the cell 3 rises. To a non-inverting (+) input of an amplifier 4.1 is applied a reference voltage $U_{REF}$, which is produced by a voltage regulator, such as zener diode 4.2, and its current-limiting resistor 4.3. To an inverting (-) input of the amplifier 4.1 is applied two measurement data items through summing resistors 4.4 and 4.5. The first of these measurement data items is the actual value $U_{B,0}$ of the cell voltage, which is formed from the cell voltage $U_B$ by means of two resistors 4.6 and 4.7. The second measurement data item is the voltage $U_{BIS,0}$ proportional to the voltage $U_B$ of the cell 3 and the bypass current $I_S$, which is received from a current measurement resistor 4.8 by means of regulation potentiometer 4.9.

First is examined the effect of merely the first measurement data item, i.e. the actual value of the cell voltage, to the connection. When the actual value $U_{B,0}$ of the cell voltage is below the reference value $U_{REF}$, the output of the amplifier 4.1 has a high value and a transistor 4.10 is in nonconductive state (cut-off state). In that case the bypass current $I_S$ does not run either, so the current measurement data item $U_{BIS,0}$ is equal to the actual value $U_{B,0}$ of the cell voltage. When the cell voltage $U_B$ rises, during charging, to the extent that the value of the inverting (-) input of the amplifier 4.1 reaches the reference voltage $U_{REF}$, the output voltage of the amplifier 4.1 starts to decrease thereby controlling the transistor to conductive state. Charging current of the cell 3 starts thus passing through the transistor. The current is controlled to a state where the voltage $U_B$ of the cell 3 keeps constant. In other words, if the bypass current $I_S$ increases so high that the voltage $U_B$ of the cell 3 starts decreasing, the amplifier 4.1 reduces the control of the transistor 4.10 such that also the bypass current $I_S$ decreases and the voltage $U_B$ of the cell is able to rise. In this manner the monitoring unit 4 stabilizes the voltage $U_B$ of the cell 3 as shown in Figure 4, curve 0. The cell voltage $UB$ remains constant irrespective of the bypass current $I_S$. The charger limits the bypass current $I_S$ such that the set upper limit (2 A in Figure 4) will not be exceeded.

Further, when the bypass current measurement data $U_{BIS,0}$ of circuit 4 in Figure 3 is taken into account, the voltage $U_B$ of the cell 3 can be changed in response to the bypass current $I_S$. The bypass current measurement data $U_{BIS,0}$ is responsive to the bypass current $I_S$ and cell voltage $U_B$ as follows:

$$U_{BIS,0} = U_B - k \cdot R_S \cdot I_s$$

where $R_s$ is resistance of a power resistor 4.8 and $k$ is the ratio between 0 to 1 of voltage division of a control potentiometer 4.9. Increase in the bypass current $I_S$ thus reduces the bypass current measurement data $U_{BIS,0}$. The bypass current measurement data $U_{BIS,0}$ is applied via summing resistor 4.5 to the inverting (-) input of the amplifier 4.1. The inverting (-) input of the amplifier 4.1 now receives via summing resistors 4.4 and 4.5 the sum data $U_{B+BIS,0}$ of the cell voltage actual value $U_{B,0}$ and the bypass current measurement data $U_{BIS,0}$. As the value of the bypass current measurement data $U_{BIS,0}$ decreases, the sum data $U_{B+BIS,0}$ also decreases. In other words, as the bypass current increases, the sum data $U_{B+BIS,0}$, which is connected to the inverting (-) input of the amplifier 4.1, decreases. The amplifier 4.1 corrects the situation by controlling the voltage $U_B$ higher. In this manner the cell voltage $U_B$ becomes responsive to the bypass current $I_S$ as well. Figure 4 shows various curve forms of the cell voltage $U_B$ responsive to the bypass current $I_S$, depending on the ratio $k$. The first curve 0 illustrates a situation, where the ratio $k = 0$, i.e. the measurement result obtained from the control potentiometer 4.9 is the same as the cell voltage $U_B$. In that case the cell voltage $U_B$ is not responsive to the bypass current $I_S$. Three other curves (I, II, III) represent situations, where the ratio $k$ is higher than zero. Increment in the ratio $k$ increases the effect of the bypass current $I_S$ to the cell voltage $U_B$. With ratio value $k = 1$ the measurement result obtained from the control potentiometer 4.9 corresponds to the voltage across the power resistor 4.8.

Figure 3 also shows how the control data ctrl is generated from the cell voltage $U_B$. The cell voltage $U_B$ is converted by an A/D converter 4.11 to digital format to serve as control data ctrl and transmitted to the charger that is indicated by reference numeral 1 in Figure 2. The control data ctrl is galvanically isolated from the connection of the monitoring unit 4. The control data ctrl may also be conveyed to the charger in analog format.

Figure 3 also shows a compensation resistor 4.13 of the amplifier 4.1, a current-limiting resistor 4.14 of the base of the transistor 4.10 and a current-limiting resistor 4.15 of the non-inverting (+) input of the amplifier 4.1. The circuitry in Figure 3 is only shown as a principle and, for instance, the amplifier may be a P regulator, or a PI or PID controller, or any combination thereof. It is obvious to a person skilled in the art that as technology advances, the basic idea of the invention may be implemented in a variety of ways. Thus, the invention and the embodiments thereof are not restricted to the above examples, but they may vary within the scope of the claims.

**Claims**

1. An arrangement for charging batteries, the arrangement comprising:

   cell groups (3) that include one or more cells, a battery pack (2) that comprises two or more cell groups (3) connected in series, monitoring units (4) for the cell groups, wherein each monitoring unit (4) is arranged to manage the voltage ($U_B$) of a cell group (3) by controlling a part, i.e. a bypass current ($I_S$) of a charging current to pass through a bypass circuit of the monitoring unit (4) bypassing the cell group (3) when the voltage ($U_B$) of the cell group reaches a reference voltage, and wherein each monitoring unit (4) comprises means for determining control data (*ctrl*) to be transmitted to a charger (1), and the charger (1) arranged to charge the battery pack (2) and comprising means for charging the battery pack (2) in response to control data (*ctrl*) determined by any monitoring unit (4), wherein each monitoring unit (4) comprises an amplifier (4.1), an inverting input of each such amplifier (4.1) is coupled to receive, via a first summing resistor (4.4) and a second summing resistor (4.5), a sum of an actual cell voltage value ($U_{B,0}$) of the respective cell group and a voltage ($U_{BIS,0}$) proportional to the voltage ($U_B$) of the respective cell group and the respective bypass current ($I_S$), a non-inverting input of each such amplifier is coupled to receive the reference voltage ($U_{REF}$), each monitoring unit (4) is arranged to allow the voltage ($U_B$) of the cell group to increase in response to an increase in the bypass current ($I_S$) of the bypass circuit of the monitoring unit (4), the means for determining control data are arranged to determine the control data (*ctrl*) in response to the voltage ($U_B$) of the cell group and the charger (1) comprises means for changing a charging voltage in response to the control data (*ctrl*) determined by any monitoring unit (4).

2. The arrangement of claim 1, **characterized in that** the means for determining the control data are arranged to determine the control data (*ctrl*) linearly in response to the voltage ($U_B$) of the cell group.

3. The arrangement of claim 1, **characterized in that** the means for determining the control data are arranged to determine the control data (*ctrl*) of on/off-type in response to the voltage ($U_B$) of the cell group.

4. The arrangement of any one of claims 1 to 3, **characterized in that** the charger (1) is arranged to start limiting the charging of the battery pack (2) when a value of the control data (*ctrl*) of any monitoring unit (4) exceeds a predetermined limit value.

5. The arrangement of any one of claims 1 to 3, **characterized in that** the charger (1) is arranged to be switched off on the basis of the control data (*ctrl*) determined by any monitoring unit (4).

**Patentansprüche**

1. Einrichtung zum Laden von Batterien, wobei die Einrichtung Folgendes umfasst:

   Zellengruppen (3), die eine oder mehrere Zellen umfassen, ein Batteriepack (2), das zwei oder mehr Zellengruppen (3) umfasst, die in Reihe geschaltet sind, Überwachungseinheiten (4) für die Zellengruppen, wobei jede Überwachungseinheiten (4) dafür eingerichtet ist, die Spannung ($U_B$) einer Zellengruppe (3) zu regeln, indem ein Teil eines Ladestroms, das heißt ein Bypass-Strom ($I_S$), so gesteuert wird, dass er durch eine Bypass-Schaltung der Überwachungseinheit (4) läuft und die Zellengruppe (3) umgeht, wenn die Spannung ($U_B$) der Zellengruppe eine Referenzspannung erreicht, und wobei jede Überwachungseinheit (4) ein Mittel zum Bestimmen von Steuerdaten (ctrl) umfasst, die dafür vorgesehen sind, an ein Ladegerät (1) übertragen zu werden, und wobei das Ladegerät (1) dafür eingerichtet ist, das Batteriepack (2) zu laden, und ein Mittel umfasst, um das Batteriepack (2) in Reaktion auf Steuerdaten (ctrl) zu laden, die von irgendeiner der Überwachungseinheiten (4) bestimmt wurden, wobei jede Überwachungseinheit (4) einen Verstärker (4.1) umfasst, wobei ein invertierender Eingang jedes solchen Verstärkers (4.1) dafür angeschlossen ist, über einen ersten summierenden Widerstand (4.4) und einen zweiten summierenden Widerstand (4.5) eine Summe eines tatsächlichen Zellenspannungswerts ($U_{B,0}$) der jeweiligen Zellengruppe und einer Spannung ($U_{BIS,0}$), die proportional zur Spannung ($U_B$) der jeweiligen Zellengruppe und dem zugehörigen Bypass-Strom ($I_S$) ist, zu empfangen,

wobei ein nicht-invertierender Eingang jedes solchen Verstärkers dafür angeschlossen ist, die Referenzspannung ($U_{REF}$) zu empfangen,

wobei jede Überwachungseinheit (4) dafür eingerichtet ist, zu gestatten, dass die Spannung ($U_B$) der Zellengruppe in Reaktion auf ein Ansteigen des Bypass-Stroms ($I_S$) der Bypass-Schaltung der Überwachungseinheit (4) ansteigt,

wobei das Mittel zum Bestimmen der Steuerdaten dafür eingerichtet ist, die Steuerdaten (ctrl) in Reaktion auf die Spannung ($U_B$) der Zellengruppe zu bestimmen, und

wobei das Ladegerät (1) ein Mittel zum Ändern einer Ladespannung in Reaktion auf die von irgendeiner der Überwachungseinheiten (4) bestimmten Steuerdaten (ctrl) umfasst.

2. Einrichtung nach Anspruch 1, **dadurch gekennzeichnet, dass** das Mittel zum Bestimmen der Steuerdaten dafür eingerichtet ist, die Steuerdaten (ctrl) in Reaktion auf die Spannung ($U_B$) der Zellengruppe linear zu bestimmen.

3. Einrichtung nach Anspruch 1, **dadurch gekennzeichnet, dass** das Mittel zum Bestimmen der Steuerdaten dafür eingerichtet ist, die Steuerdaten (ctrl) in Reaktion auf die Spannung ($U_B$) der Zellengruppe vom An/Aus-Typ zu bestimmen.

4. Einrichtung nach einem der Ansprüche 1 bis 3, **dadurch gekennzeichnet, dass** das Ladegerät (1) dafür eingerichtet ist, zu beginnen das Laden des Batteriepacks (2) zu begrenzen, wenn ein Wert der Steuerdaten (ctrl) irgendeiner der Überwachungseinheiten (4) einen vorgegebenen Grenzwert übersteigt.

5. Einrichtung nach einem der Ansprüche 1 bis 3, **dadurch gekennzeichnet, dass** das Ladegerät (1) dafür eingerichtet ist, auf Basis der von irgendeiner der Überwachungseinheiten (4) bestimmten Steuerdaten (ctrl) ausgeschaltet zu werden.

**Revendications**

1. Agencement de charge des batteries, l'agencement comprenant :

des groupes de cellules (3) qui comprennent une ou plusieurs cellules,
un bloc-batteries (2) qui comprend deux ou plusieurs groupes de cellules (3) connectés en série,
des unités de surveillance (4) pour les groupes de cellules, où chaque unité de surveillance (4) est agencée pour gérer la tension ($U_B$) d'un groupe de cellules (3) en commandant une fraction, à savoir un courant de dérivation (Is) d'un courant de charge à passer à travers un circuit de dérivation de l'unité de surveillance (4) en contournant le groupe de cellules (3) lorsque la tension ($U_B$) du groupe de cellules atteint une tension de référence, et où chaque unité de surveillance (4) comprend des moyens pour déterminer des données de commande (ctrl) à transmettre à un chargeur (1), et

le chargeur (1) agencé pour charger le bloc-batteries (2) et comprenant des moyens pour charger le bloc-batteries (2) en réponse à des données de commande (ctrl) déterminées par l'une quelconque des unités de surveillance (4), où chaque unité de surveillance (4) comprend un amplificateur (4.1),

une entrée inverseuse de chacun de ces amplificateurs (4.1) est couplée pour recevoir, via une première résistance de sommation (4.4) et une deuxième résistance de sommation (4.5), une somme d'une valeur de tension de cellule réelle ($U_{B,0}$) du groupe de cellules respectif et une tension ($U_{BIS,0}$) proportionnelle à la tension ($U_B$) du groupe de cellules respectif et au courant de dérivation respectif ($I_S$),

une entrée non-inverseuse de chacun de ces amplificateurs est couplée pour recevoir la tension de référence ($U_{REF}$),

chaque unité de surveillance (4) est configurée de manière à permettre à la tension ($U_B$) du groupe de cellules d'augmenter en réponse à une augmentation du courant de dérivation (Is) du circuit de dérivation de l'unité de surveillance (4),

les moyens de détermination des données de commande sont configurés de manière à déterminer les données de commande (ctrl) en réponse à la tension ($U_B$) du groupe de cellules et le chargeur (1) comprend des moyens pour modifier une tension de charge en réponse aux données de commande (ctrl) déterminées par une unité de surveillance quelconque (4).

2. Agencement selon la revendication 1, **caractérisé en ce que** les moyens pour déterminer les données de commande sont configurés pour déterminer les données de commande (ctrl) de manière linéaire en réponse à la tension ($U_B$) du groupe de cellules.

3. Agencement selon la revendication 1, **caractérisé en ce que** les moyens pour déterminer les données de commande sont configurés pour déterminer les données de commande (ctrl) en mode marche/arrêt en réponse à la tension ($U_B$) du groupe de cellules.

4. Agencement selon l'une quelconque des revendications 1 à 3, **caractérisé en ce que** le chargeur (1) est configuré pour commencer à limiter la charge du bloc-batteries (2) lorsqu'une valeur des données de commande (*ctrl*) d'une quelconque unité de surveillance (4) dépasse une valeur limite prédéterminée.

5. Agencement selon l'une quelconque des revendications 1 à 3, **caractérisé en ce que** le chargeur (1) est configuré pour être mis hors tension sur la base des données de commande (*ctrl*) déterminées par une unité de surveillance quelconque (4).

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH I185561983
- US 6211650 B
- US 6271646 B
- US 6121752 A
- US 6025696 A
- US 5850136 A
- US 5850351 A
- US 5578914 A